# Europäisches Patentamt

# European Patent Office

# Office européen des brevets

(19)

(11) Numéro de publication: **0 091 633**
**B1**

(12) ## FASCICULE DE BREVET EUROPEEN

(45) Date de publication du fascicule du brevet:
09.04.86

(51) Int. Cl.⁴: **G 02 B 6/36, H 02 G 15/14**

(21) Numéro de dépôt: **83103277.6**

(22) Date de dépôt: **05.04.83**

(54) Dispositif de raccordement des extrémités de deux câbles sous-marins à fibres optiques et son procédé de fabrication.

(30) Priorité: 09.04.82 FR 8206242

(43) Date de publication de la demande:
19.10.83 Bulletin 83/42

(45) Mention de la délivrance du brevet:
09.04.86 Bulletin 86/15

(84) Etats contractants désignés:
**DE FR GB IT**

(73) Titulaire: **LES CABLES DE LYON Société anonyme dite:,
170 quai de Clichy, F-92111 Clichy Cedex (FR)**

(72) Inventeur: **Mignien, Georges, 11, rue de la Passerelle,
F-62100 Calais (FR)**

(74) Mandataire: **Weinmiller, Jürgen et al, Zeppelinstrasse 63,
D-8000 München 80 (DE)**

(56) Documents cités:
**US - A - 4 166 921
US - A - 4 227 770**

**BELL LABORATORIES RECORD, vol. 48, no. 2, février
1970, pages 35-37, Murray Hill, USA, G.J. SCHAIBLE et
al.: "Splicing ocean cable"
PATENTS ABSTRACTS OF JAPAN, vol. 4, no. 103, (585),
23 juillet 1980, page 113 P 20**

## Description

La présente invention concerne un dispositif de raccordement des extrémités de deux câbles sous-marins à fibres optiques chaque câble comprenant un coeur optique constitué d'un fil porteur recouvert d'un jonc rainuré hélicoïdalement en matière plastique où s'insèrent des fibres optiques; un ruban de protection entourant le coeur optique; un ensemble voûte en fils d'acier; un tube de cuivre rétreint sur l'ensemble-voûte; une gaine isolante en matière thermoplastique.

Elle concerne aussi un procédé de fabrication d'un tel dispositif.

On connait selon une suggestion faite antérieurement, différents dispositifs de raccordement deux extrémités de câbles pour la réalisation d'une réparation d'un câble endommagé, formés par des boîtes de raccordement occupant un volume appréciable et ayant un diamètre extérieur de l'ordre de 150 mm et une longueur d'environ 1,30 m.

De plus, cette boîte de raccordement est tout à fait rigide, et cela complique le passage de la boîte sur un davier, lors du bobinage dudit câble. Ces boîtes ne sont utilisables que pour une réparation possible après fabrication complète du câble.

L'invention permet de remédier à de tels inconvénients, en proposant un dispositif et un procédé permettant la réparation d'un câble, dans les différents stades de sa fabrication ayant lieu après isolation par une première gain isolante en matière thermoplastique.

Elle permet en outre de réaliser un raccordement qui garde l'aspect géométrique et dimensionnel du câble sans augmenter sa rigidité, facilitant ainsi son passage sur un davier.

Le dispositif de raccordement selon l'invention est caractérisé en ce qu'il comprend:

a. deux joncs lisses en matière plastique, collés aux extrémités de chaque câble sur le fil porteur, autour desquels sont enroulées les extrémités des fibres optiques soudés individuellement l'une à l'autre et protégées par deux rubans,

b. deux tubes fendus en matière plastique, recouvrant les fibres optiques enrubannées aux extrémités de chaque câble,

c. un fourreau autour duquel sont recablés les extrémités de chaque ensemble-voûte,

d. un manchon collé et/ou serti sur les extrémités de chaque ensemble-voûte.

Avantageusement il comprend un remplissage de l'espace laissé libre entre les extrémités de chaque ensemble-voûte, le fourreau et le manchon ainsi qu'un remplissage des extrémités du manchon, par une colle.

Le procédé de fabrication d'un dispositif de raccordement selon l'invention est caractérisé en ce que:

a. on élimine à chaque extrémité de câble sur une longueur très supérieure à celle désirée pour ledit raccordement, la gaine isolante le tube de cuivre rétreint, on décâble l'ensemble-voûte, on élimine sur une longueur également très

supérieure à celle désirée pour ledit raccordement, le jonc rainuré en laissant à nu les fibres optiques et le fil porteur,

b. on engage sur une extrémité de câble le fourreau et le manchon,

c. on place à chaque extrémité de câble les joncs lisses,

d. on raccorde les fibres optiques une à une par une soudure et on les enroule de part et d'autre de la soudure sur chaque jonc lisse,

e. on met en place les rubans souples de protection sur les fibres puis les tubes fendus sur les rubans,

f. on ramène le fourreau au centre du raccordement en recouvrant chaque extrémité be tube fendu puis on recâble chaque ensemble-voûte sur le fourreau,

g. on ramène le manchon au centre du raccordement, sur les extrémités de chaque ensemble-voûte.

De préférence on remplit l'espace laissé libre entre les extrémités de chaque ensemble-voûte le fourreau et le manchon ainsi que les extrémités du manchon, par une colle.

Il est décrit ci-après à titre d'exemple et en référence aux figures du dessin annexé, un dispositif de raccordement et un procédé de fabrication d'un tel dispositif de raccordement des extrémités de deux câbles possédant chacun un conducteur de retour et une gaine de protection en matière thermoplastique enrobant ledit conducteur de retour.

Les figures 1A et 1B représentent, en perspective, une extrémité de chaque câble avec ses différents composants.

La figure 2 représente en coupe partielle le dispositif de raccordement selon l'invention pour un câble et les différentes couches reconstituées.

La figure 3 représente à plus grande échelle un détail du dispositif de raccordement selon la figure 2.

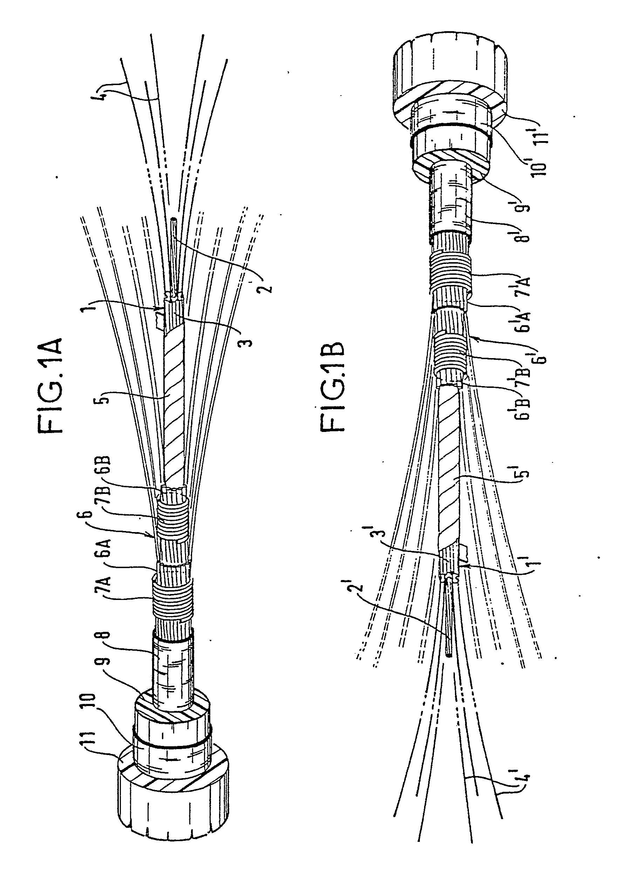

Dans les figures 1A et 1B l'extrémité de chaque câble comprend un coeur optique 1, 1' constitué d'un fil porteur 2, 2' recouvert d'un jonc rainuré 3, 3' hélicoïdalement en matière plastique où s'insèrent les fibres optiques 4, 4'. Ledit coeur optique est recouvert d'un ruban de protection 5, 5' puis un ensemble voûte 6, 6' en fils d'acier, composé d'une première voûte 6A, 6'A et d'une deuxième voûte 6B, 6'B, est maintenu serré sur le coeur optique par deux frettes 7A, 7'A et 7B, 7'B pour éviter le décâblage dudit ensemble-voûte avant le raccordement. Un tube de cuivre 8, 8' est rétreint sur l'ensemble voûte, recouvert d'une gaine isolante 9, 9'. Dans cette forme de réalisation, le câble comprend un conducteur de retour 10, 10' recouvert d'une gaine de protection 11, 11'.

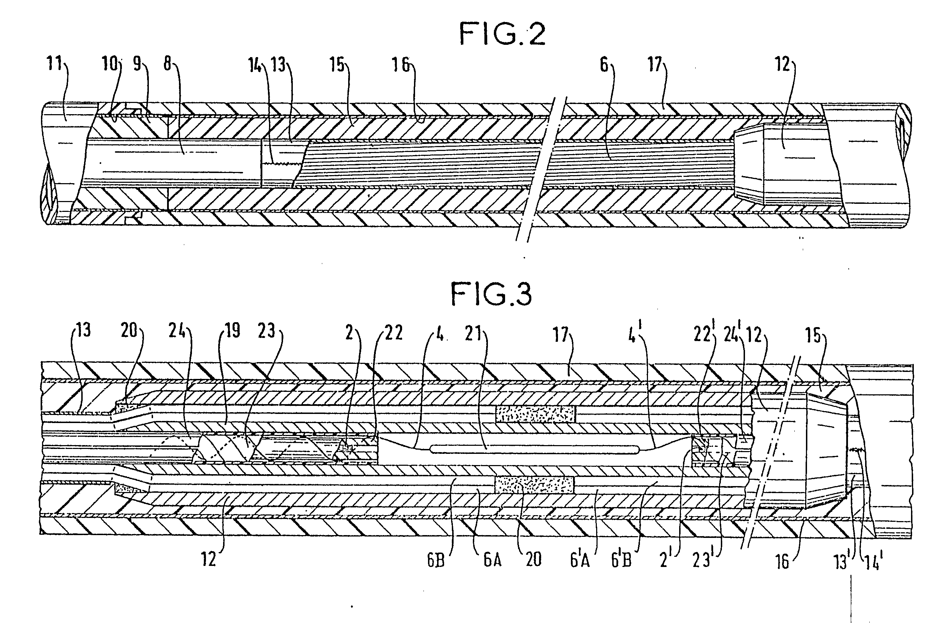

Dans la figure 2, représentant une extrémité de câble, l'extrémité d'un manchon 12 enserre l'ensemble-voûte 6. Le tube de cuivre 8 rétreint sur la voûte est reconstituée par une bande de cuivre 13 soudée longitudinalement au moyen d'une soudure 14.

Un moulage 15 en matière thermoplastique raccorde la gaine isolante 9 de cet extrémité de câble et la gaine isolante de l'extrémité de l'autre câble non représenté. Dans cette forme de réalisation comprenant un conducteur de retour, une tresse ou bande métallique 16 raccorde le conducteur de retour 10 de cet extrémité de câble et le conducteur de retour de l'extrémité de l'autre câble non représenté, et un manchon thermorétractable 17 raccorde la gaine de protection 11 de cet extrémité de câble et la gaine de protection de l'extrémité de l'autre câble non représenté.

Dans la figure 3, représentant l'intérieur du manchon 12 et les différentes couches reconstitués, les fibres optiques 4, 4' sont raccordées par soudure et protégées par un manchon 21.

Les fibres 4 sont enroulées sur un jonc lisse 22 lui-même collé sur le fil porteur 2, et elles sont protégées par un ruban 23 équivalent au ruban 5 de la figure 1A. Un tube fendu 24 recouvre le ruban 23.

Il en est de même pour les fibres 4', enroulées sur un jonc lisse 22' lui-même collé sur le fil porteur 2', et protégées par un ruban 23' équivalent au ruban 23. Un tube fendu 24' recouvre le ruban 23'.

Les deux extrémités des tubes fendus 24, 24' sont recouvertes par un fourreau 19. Les extrémités des ensembles-voûte sont recâblées sur ledit fourreau. Le manchon 12 recouvre les extrémités des ensembles-voûte et est rempli d'une colle 20. Deux bandes de cuivre 13, 13' de chaque côté du manchon, soudées longitudinalement, reconstituent le tube de cuivre 8, 8' rétreint de chaque extrémité de câble. Un moulage de reconstitution 15 en matière thermoplastique assure la continuité des gaines isolantes 9, 9' de chaque extrémité de câble. Dans cette forme de réalisation une bande 16 de métal conducteur soudée longitudinalement assure la continuité du conducteur de retour 10, 10', et un manchon thermorétractable 17 assure la continuité de la gaine de protection 11, 11' de chaque extrémité de câble.

La fabrication du dispositif qui vient d'être décrit s'effectue comme suit:

On élimine à chaque extrémité de câble sur une longueur très supérieure à celle désirée pour ledit raccordement, la gaine de protection 11, le conducteur de retour 10, la gaine isolante 9, le tube de cuivre rétreint 8.

On décâble l'ensemble-voûte et on élimine le jonc rainuré 3, à chaque extrémité de câble sur une longueur très supérieure à celle désirée pour ledit raccordement en laissant à nu les fibres optiques 4 et le fil porteur 2.

On engage sur une extrémité de câble, le fourreau 19 et le manchon 12.

On place à chaque extrémité de câble les deux joncs lisses 22, 22' sur les deux fils porteurs 2, 2'.

On raccorde les fibres optiques une à une par soudure et on protège chaque soudure par un manchon 21, et on les enroule de part et d'autre de la soudure sur chaque jonc lisse.

On met en place les rubans souples 23, 23' sur les fibres, puis les tubes fendus sur les rubans.

On ramène le fourreau 19 au centre du raccordement en recouvrant chaque extrémité de tube fendu puis on recâble chaque ensemble-voûte sur le fourreau.

On ramène le manchon 12 au centre du raccordement sur les extrémités de chaque ensemble-voûte.

On remplit l'espace laissé libre entre les extrémités de chaque ensemble-voûte le fourreau et le manchon ainsi que les extrémités du manchon par une colle 20.

On reconstitue le tube de cuivre rétreint 8, 8'' jusqu'au niveau du manchon 12 en plaçant de part et d'autre de celui-ci deux bandes de cuivre 13, 13' soudées longitudinalement par deux soudures 14, 14'.

On assure la continuité de la gaine isolante 9, 9' de chaque extrémité de câble par un moulage 15 en matière thermoplastique sur toute la longueur du raccordement.

Dans cette forme de réalisation, on assure la continuité du conducteur de retour de chaque extrémité de câble par une bande 16 de métal conducteur soudée longitudinalement, et on assure la continuité de la gaine de protection de chaque extrémité de câble par un manchon thermorétractable 17.

Bien entendu, on peut, sans sortir du cadre de l'invention, utiliser une tresse métallique pour raccorder les conducteurs de retour de chaque extrémité de câble, ou raccorder les extrémités de deux câbles ne possédant pas de conducteur de retour, le dispositif et le procédé s'en trouve alors simplifié.

**Revendications**

1. Dispositif de raccordement des extrémités de deux câbles sous-marins à fibres optiques chaque câble comprenant un coeur optique (1, 1') constitué d'un fil porteur (2, 2') recouvert d'un jonc (3, 3') rainuré hélicoïdalement en matière plastique où s'insèrent des fibres optiques (4, 4'); un ruban de protection (5, 5') entourant le coeur optique; un ensemble voûte (6, 6') en fils d'acier; un tube de cuivre rétreint (8, 8') sur l'ensemble-voûte; une gaine isolante en matière thermoplastique (9, 9'), caractérisé en ce qu'il comprend:

a. deux joncs lisses (22, 22') en matière plastique, collés aux extrémités de chaque câbles sur le fil porteur (2, 2'), autour desquels sont enroulées les extrémités des fibres optiques (4, 4') soudées individuellement l'une à l'autre et protégées par deux rubans (23, 23')

b. deux tubes fendus (24, 24') en matière plastique, recouvrant les fibres optiques enrubannées aux extrémités de chaque câble

c. un fourreau (19) autour duquel sont recâblés les extrémités de chaque ensemble-voûte (6, 6')

d. un manchon (12) collé et/ou serti sur les extrémités de chaque ensemble-voûte.

2. Dispositif de raccordement selon la revendication 1, caractérisé en ce qu'il comprend un remplissage de l'espace laissé libre entre les extrémités de chaque ensemble-voûte, le fourreau et le manchon ainsi qu'un remplissage des extrémités du manchon, par une colle (20).

3. Dispositif de raccordement selon la revendication 1, caractérisé en ce qu'il comprend, de chaque côté du manchon, deux bandes de cuivre (13, 13') soudées longitudinalement qui reconstituent le tube de cuivre (8, 8') rétreint de chaque extrémité de câble.

4. Dispositif de raccordement selon la revendication 1, caractérisé en ce qu'il comprend un moulage de reconstitution (15) en matière thermoplastique qui assure la continuité des gaines isolantes (9, 9') de chaque extrémité de câble.

5. Dispositif de raccordement selon la revendication 1, dans lequel chaque câble comprend un conducteur de retour (10, 10'), caractérisé en ce qu'il comprend, une bande de métal (16) conducteur soudée longitudinalement qui assure la continuité du conducteur de retour de chaque extrémité de câble.

6. Dispositif de raccordement selon la revendication 1, dans lequel chaque câble comprend une gaine de protection (11, 11') entourant le conducteur de retour, caractérisé en ce qu'il comprend un manchon thermorétractable (17) qui assure le continuité de la gaine de protection (11, 11') de chaque extrémité de câble.

7. Procédé de fabrication d'un dispositif de raccordement selon la revendication 1, caractérisé en ce que:

a. on élimine à chaque extrémité de câble sur une longueur très supérieure à celle désirée pour ledit raccordement, la gaine isolante (9, 9') le tube de cuivre rétreint (8, 8'), on décâble l'ensemble-voûte (6, 6'), on élimine sur une longueur également très supérieure à celle désirée pour ledit raccordement, le jonc rainuré (3, 3') en laissant à nu les fibres optiques (4, 4') et le fil porteur (2, 2'),

b. on engage sur une extrémité de câble le fourreau (19) et le manchon (12),

c. on place à chaque extrémité de câble les joncs lisses (22, 22'),

d. on raccorde les fibres optiques une à une par une soudure et on les enroule de part et d'autre de la soudure sur chaque jonc lisse,

e. on met en place les rubans souples de protection (23, 23') sur les fibres puis les tubes fendus (24, 24') sur les rubans,

f. on ramène le fourreau (19) au centre du raccordement en recouvrant chaque extrémité de tube fendu puis on recâble chaque ensemble-voûte sur le fourreau,

g. on ramène le manchon (12) au centre du raccordement sur les extrémités de chaque ensemble-voûte.

8. Procédé de fabrication selon la revendication 7, caractérisé en ce que l'on remplit l'espace laissé libre entre les extrémités de chaque ensemble-voûte, le fourreau et le manchon ainsi que les extrémités du manchon, par une colle (20).

9. Procédé de fabrication selon la revendication 8, caractérisé en ce que l'on reconstitue le tube de cuivre rétreint (8, 8') de chaque extrémité de câble jusqu'au niveau du manchon, en plaçant de part et d'autre de celui-ci, deux bandes de cuivre (13, 13') soudées longitudinalement.

10. Procédé de fabrication selon la revendication 8, caractérisé en ce que l'on assure la continuité de la gaine isolante (9, 9') de chaque extrémité de câble par un moulage en matière thermoplastique (15).

11. Procédé de fabrication selon la revendication 8 d'un dispositif dans lequel chaque câble comprend un conducteur de retour, caractérisé en ce que l'on assure la continuité du conducteur de retour (10, 10') de chaque extrémité de câble par une bande de métal conducteur (16) soudée longitudinalement.

12. Procédé de fabrication selon la revendication 8 d'un dispositif dans lequel chaque câble comprend une gaine de protection recouvrant un conducteur de retour, caractérisé en ce que l'on assure la continuité de la gaine de protection (11, 11') de chaque extrémité de câble par un manchon thermorétractable (17).

**Patentansprüche**

1. Vorrichtung zur Verbindung zweier Unterwasser-Lichtleitfaserkabel, wobei jedes Kabel einen optischen Kern (1, 1') aus einem von einem spiralförmig genuteten Trägerzylinder (3, 3') aus Kunststoffmaterial umhüllten Trägerdraht (2, 2'), wobei sich Lichtleitfasern (4, 4') in die Nuten einfügen, ein Schutzband (5, 5'), das den optischen Kern umgibt, eine Bewehrungseinheit (6, 6') aus Stahldrähten, ein auf die Bewehrungseinheit aufgeschrumpftes Kupferrohr (8, 8') und eine Isolierhülle aus wärmeverformbarem Material (9, 9') aufweist, dadurch gekennzeichnet, daß sie aufweist

a. zwei glatte Rohre (22, 22') aus Kunststoffmaterial, die an den Enden jedes Kabels auf den Trägerdraht (2, 2') geklebt sind, wobei die Enden der Lichtleitfasern (4, 4') um die Rohre gerollt sind und einzeln aneinandergelötet und durch zwei Bänder (23, 23') geschützt sind,

b. zwei geschlitzte Rohre (24, 24') aus Kunststoffmaterial, die die umwickelten Lichtleitfasern an den Enden jedes Kabels bedecken,

c. eine Schutzhülle (19), um die herum die Enden jeder Bewehrungseinheit (6, 6') wieder verkabelt sind,

d. eine Buchse (12), die auf die Enden jeder Bewehrungseinheit geklebt und/oder aufgeschrumpft ist.

2. Verbindungsvorrichtung nach Anspruch 1, dadurch gekennzeichnet, daß sie eine Füllung des freigelassenen Raums zwischen den Enden jeder Bewehrungseinheit, der Schutzhülle und der Buchse wie auch eine Füllung der Enden der Buchse mit einem Kleber (20) erfolgt.

3. Verbindungsvorrichtung nach Anspruch 1, dadurch gekennzeichnet, daß sie auf jeder Seite der Buchse zwei in Längsrichtung aufgeschweißt Kupferbänder (13, 13') aufweist, die das geschrumpfte Kupferrohr (8, 8') jedes Kabelendes wiederherstellen.

4. Verbindungsvorrichtung nach Anspruch 1, dadurch gekennzeichnet, daß ein wärmeverformbares Material (15), das die Kontinuität zwischen den Isolierhüllen (9, 9') an jedem Kabelende bewirkt, aufgegossen wird.

5. Verbindungsvorrichtung nach Anspruch 1, in der jedes Kabel einen Rückleiter (10, 10') aufweist, dadurch gekennzeichnet, daß sie ein in Längsrichtung aufgeschweißtes leitendes Metallband (16) aufweist, das die Kontinuität des Rückleiters jedes Kabelendes gewährleistet.

6. Verbindungsvorrichtung nach Anspruch 1, in der jedes Kabel eine Schutzhülle (11, 11') enthält, die den Rückleiter umgibt, dadurch gekennzeichnet, daß sie eine wärmeschrumpfende Muffe (17) aufweist, die die Kontinuität der Schutzhülle (11, 11') jedes Kabelendes gewährleistet.

7. Herstellungsverfahren für eine Verbindungsvorrichtung nach Anspruch 1, dadurch gekennzeichnet, daß

a. man an jedem Kabelende über eine Länge, die sehr viel größer ist als die für die Verbindung gewünschte Länge, die Isolierhülle (9, 9'), das aufgeschrumpfte Kupferrohr (8, 8') entfernt, dann die Bewehrungseinheit (6, 6') entkabelt, dann über eine ebenfalls sehr viel größere Länge als für die Verbindung gewünscht des genutete Rohr (3, 3') entfernt, indem man die Lichtleitfasern (4, 4') und den Trägerdraht (2, 2') blank läßt,

b. man auf ein Kabelende die Schutzhülle (19) und die Buchse (12) aufzieht,

c. man an jedem Kabelende die glatten Rohre (22, 22') anbringt,

d. man die Lichtleitfasern einzeln durch eine Lötung verbindet und sie zu beiden Seiten der Lötung auf jedes glatte Rohr aufrollt,

e. man die biegsamen Schutzbänder (23, 23') auf die Fasern und dann die geschlitzten Rohre (24, 24') uuf die Bänder aufbringt,

f. man die Schutzhülle (19) in die Mitte der Verbindung zurückbringt, indem man jedes Ende des geschlitzten Rohres bedeckt und dann jede Bewehrungseinheit wieder auf der Schutzhülle verkabelt,

g. man die Buchse (12) in die Mitte der Verbindung auf die Enden jeder Bewehrungseinheit zurückbringt.

8. Herstellungsverfahren nach Anspruch 7, dadurch gekennzeichnet, daß man den zwischen den Enden jeder Bewehrungseinheit, der Schutzhülle und der Buchse freigelassenen Raum wie auch die Enden der Buchse mit einem Kleber (20) füllt.

9. Herstellungsverfahren nach Anspruch 8, dadurch gekennzeichnet, daß man das geschrumpfte Kupferrohr (8, 8') jedes Kabelendes bis zur Höhe der Buchse dadurch wiederherstellt, daß man auf beiden Seiten der letzteren zwei in Längsrichtung aufgeschweißte Kupferbänder (13, 13') anbringt.

10. Herstellungsverfahren nach Anspruch 8, dadurch gekennzeichnet, daß man die Kontinuität der Isolierhülle (9, 9') jedes Kabelendes durch einen Guß aus wärmeverformbarem Material (15) herstellt.

11. Herstellungsverfahren nach Anspruch 8 für eine Vorrichtung, in der jedes Kabel einen Rückleiter aufweist, dadurch gekennzeichnet, daß man die Kontinuität des Rückleiters (10, 10') jedes Kabelendes durch ein in Längsrichtung aufgeschweißtes leitendes Metallband (16) bewirkt.

12. Herstellungsverfahren nach Anspruch 8 für eine Vorrichtung, bei der jedes Kabel eine einen Rückleiter umgebende Schutzhülle aufweist, dadurch gekennzeichnet, daß man die Kontinuität der Schutzhülle (11, 11') jedes Kabelendes durch eine wärmeschrumpfbare Muffe (17) erreicht.

**Claims**

1. A device for connecting the ends of two submarine optical fiber cables, each cable comprising an optical core (1, 1') constituted by a carrier wire (2, 2') covered by a helically grooved plastics rod (3, 3') having optical fibers (4, 4') received in its grooves, a protective tape (5, 5') surrounding the optical core; a steel wire arch assembly (6, 6'); a copper tube (8, 8') shrunk on the arch assembly; an insulating sheath (9, 9') made of a thermoplastic substance, characterized in that it includes:

a. two smooth plastics rods (22, 22') glued at the ends of each cable to the carrier wire (2, 2'), the ends of the optical fibers (4, 4') being wound therearound, the fibers being welded individually to one another and being protected by two tapes (23, 23');

b. two split plastics tubes (24, 24') covering the optical fibers which are surrounded with tape at the ends of each cable;

c. a sheath (19) around which the ends of each arch assembly (6, 6') are reconstituted;

d. a sleeve (12) glued and/or shrunk onto the ends of each arch assembly.

2. A connection device according to claim 1, characterized in that the space left free between the ends of each arch assembly, the sheath and the sleeve as well as the ends of the sleeve are filled with glue (20).

3. A connection device according to claim 1, characterized in that it includes, on sach side of the sleeve, two copper tapes (13, 13') welded longitudinally which reconstitute the shrunk copper tube (8, 8') of each cable end.

4. A connection device according to claim 1, characterized in that it includes a thermoplastic reconstitution moulding (15) which provides continuity of the insulating sheaths (9, 9') of each cable end.

5. A connection device according to claim 1, in which each cable has a return conductor (10, 10'), characterized in that it includes a longitudinally welded conductive metal tape (16) which provides continuity of the return conductor of each cable end.

6. A connection device according to claim 1, in which each cable has a protective sheath (11, 11') which surrounds the return conductor, characterized in that it includes a heat shrinkable sleeve (17) which provides continuity of the protective sheath (11, 11') of each cable end.

7. A method of manufacturing a connection device according to claim 1, characterized in that:

a. the insulating sheath (9, 9'), the shrunk copper tube (8, 8') are removed from each cable end along a length very much greater than that required for said connection, the arch assembly (6, 6') is untwisted, the grooved rod (3, 3') is removed from each cable end along a length very much greater than that required for said connection, leaving the optical fibers (4, 4') and the carrier wire (2, 2') bare;

b. the sheath (19) and the sleeve (12) are engaged on a cable end;

c. the two smooth rods (22, 22') are placed on each cable end;

d. the optical fibers are welded together one-to-one and they are wound round the smooth rods on either side of their welds;

e. the resilient protective tapes (23, 23') are set in position on the fibers and then the split tubes (24, 24') are set in position on the tapes;

f. the sheath (19) is brought back to the centre of the connection, covering each end of the split tube, then each arch assembly is reformed over the sheath;

g. the sleeve (12) is brought back to the centre of the connection on the ends of each arch assembly.

8. A manufacturing method according to claim 7, characterized in that the space left free between the ends of each arch assembly, the sheath and the sleeve as well as the ends of the sleeve are filled with glue (20).

9. A manufacturing method according to claim 8, characterized in that the shrunk copper tube (8, 8') of each cable end is reconstituted up to the level of the sleeve by placing two copper tapes (13, 13') on either side thereof, said copper tapes being welded longitudinally.

10. A manufacturing method according to claim 8, characterized in that the continuity of the insulating sheath (9, 9') of each cable end is provided by a moulding made of a thermoplastics substance (15).

11. A method according to claim 8 for manufacturing a device in which each cable includes a return conductor, characterized in that the continuity of the return conductor (10, 10') of each cable end is provided by a longitudinally welded conductive metal tape (16).

12. A method according to claim 8 for manufacturing a device in which each cable includes a protective sheath covering a return conductor, characterized in that the continuity of the protective sheath (11, 11') of each cable end is provided by a heat-shrinkable sleeve (17).

FIG.1A

FIG.1B

0 091 633

## FIG.2

## FIG.3